# EUROPEAN PATENT SPECIFICATION

(11) **EP 4 190 681 B1**
(45) Date of publication and mention of the grant of the patent: **04.02.2026**
(21) Application number: 21211676.8
(22) Date of filing: 01.12.2021
(51) Int. Cl.: B63B 35/58

(54) **AN ARTICULATED STRUCTURE**
GELENKSTRUKTUR
STRUCTURE ARTICULÉE

(43) Date of publication of application: 07.06.2023
(73) Proprietor: SolarDuck Holding B.V., 6623 MC Nijmegen (NL)
(72) Inventor: Huiskamp, Ewoud, 2623 MK Delft (NL); Hoogendoorn, Cornelis Frans Donald, 2803 AW Gouda (NL); Morshuis, Carel Alexander, 1092 SC Amsterdam (NL)
(74) Representative: De Vries & Metman

(56) References cited:
- KR-A- 20170 052 149
- KR-B1- 101 807 998
- KR-B1- 102 234 136

## Description

The present invention relates to an articulated structure, comprising a central frame and at least three satellite frames surrounding the central frame, wherein the central frame and the satellite frames extend in a common main plane and each of the satellite frames is coupled to the central frame by a pair of couplings.

Such an articulated structure is described in patent application PCT/EP2020/087842 of the applicant. This articulated structure is a floating structure which is provided with buoyant members. The central frame and the satellite frames may be used as platforms for supporting PV panels and can be applied both in-shore or off-shore.

KR 101 807 998 is related to a floating type solar power generating system formed in various shapes by connecting unit floating bodies that float on water and have unit area. The floating type solar power generating system comprises: a floating body floating on the water surface and having a footboard for maintenance on the outer side; a fixing member installed in the footboard of the floating body and preventing the floating body from being moved by being inserted into the bottom under the water; a solar array module installed on the upper surface of the floating body and having multiple solar cells producing direct current power by using collected sunlight and connected to each other; an angle control member controlling a holding angle of the solar array module; and a connection member connecting the floating body and the neighbouring floating body.

KR 102 234 136 is related to a floating assembly for solar power generation configured to reduce the risk of damage to the floating assembly by sea waves by forming a floating assembly for solar power generation by expanding and coupling a floating body for solar power generation in which a solar panel and a structural beam are installed on top with another floating body, while allowing the expansion coupling between the floating bodies to be made based on a virtual regular hexagonal arrangement structure.

KR 2017 0052149 is related to photovoltaic power generation device with a floating connection structure on the water, capable of preventing damage to a connection means and maintaining a tight connection force always by including different countermeasures when a wave (flow of water) is generated in each generation unit when connecting a plurality of generation units and preventing a loss of the generation unit, thereby implementing a stable generation device. The photovoltaic power generation device on the water includes a plurality of buoyancy units which float on the water and the plurality of generation units composed of photovoltaic modules installed on the upper sides of the buoyancy units, respectively.

An object of the invention is to provide an articulated structure including pairs of couplings which are relatively simple, on the one hand, and provide appropriate freedom of motion between the central frame and the satellite frames, on the other hand.

This object is accomplished with the articulated structure according to the invention wherein a first coupling of the pair of couplings comprises a first support that is mounted to the central frame through a first pivot and to the satellite frame through a second pivot, wherein at least one of the first and second pivots has a single pivot point, such as a ball joint, and the other one of the first and second pivots has at least one pivot axis, and wherein a second coupling of the pair of couplings comprises a second support that is mounted to the central frame through a third pivot and to the satellite frame through a fourth pivot, wherein at least one of the third and fourth pivots has a single pivot point, such as a ball joint, and the other one of the third and fourth pivots has at least one pivot axis, hence forming an imaginary axis of rotation through the pivot point of one of the first and second pivot and the pivot point of one of the third and fourth pivot.

The pairs of couplings allow the central frame and each of the satellite frames to rotate with respect to each other about the respective imaginary axes of rotation.

In an embodiment the central frame has at least three side edges, which are adjacent to respective side edges of the at least three satellite frames, wherein along each of two adjacent side edges of the central frame and the respective satellite frames the first and second couplings are located at a distance from each other. In this case the imaginary axis of rotation has at least a component which extends along the adjacent side edges and parallel to the main plane.

The adjacent side edges may extend substantially parallel to each other. In this case the imaginary axis of rotation has at least a component which extends parallel to the adjacent side edges and the main plane.

The adjacent side edges may be substantially linear.

It is also conceivable that the adjacent side edges are non-linear, for example curved.

In a particular embodiment each of the central frame and the satellite frames has three side edges which form a triangle within the main plane. The triangles may be equilateral. Nevertheless, the central frame and the satellite frames may have different polygonal shapes such as squares, pentagons etc.

In general, the central frame and the satellite frames may have similar shapes and dimensions.

Each of the first pivot and the second pivot may have a single pivot point such that the first support has at least three degrees of freedom with respect to the central frame and with respect to the satellite frame.

Furthermore, each of the third pivot and fourth pivot may have a single pivot point such that the second support also has at least three degrees of freedom with respect to the central frame and with respect to the satellite frame.

In an embodiment the distance between the first and third pivot points is fixed and the distance between the second and fourth pivot points is fixed.

In an alternative embodiment the single pivot point of one of the first and second pivot and the single pivot point of one of the third and fourth pivot are movable with respect to each other, for example by means of a sliding structure.

At least one of the first and second supports may be rigid. This means that the distance between the single pivot point of one of the first and second pivots and the at least one pivot axis of the other one of the first and second pivots is fixed and the distance between the single pivot point of one of the third and fourth pivots and the at least one pivot axis of the other one of the third and fourth pivots is fixed. An advantage of this configuration is that it has a minimum number of moving parts. In practice both the first and second supports may be rigid.

The distance between the pivot point of one of the first and second pivots and the at least one pivot axis of the other one of the first and second pivots may be equal to the distance between the pivot point of one of the third and fourth pivots and the at least one pivot axis of the other one of the third and fourth pivots.

In a preferred embodiment the first and second couplings are provided with respective motion limiters for limiting at least one of the following relative motions of the central frame and each of the satellite frames: a displacement in a direction extending perpendicularly to the main plane, which may be called a heave motion, a rotation about an axis extending perpendicularly to the main plane, which may be called a yaw motion, a displacement in a direction extending parallel to the main plane and transversely with respect to the imaginary axis of rotation, which may be called a surge motion, a rotation about an axis extending parallel to the main plane and transversely with respect to the imaginary axis of rotation, which may be called a roll motion, a displacement along the imaginary axis of rotation, which may be called a sway motion, and a rotation about the imaginary axis of rotation, which may be called a pitch motion. The motion limiters prevent the central frame and the satellite frames from collisions between each other.

The motion limiters may comprise linearly extendable elements, wherein opposite ends of each element are pivotably mounted to the respective frames and movable with respect to each other between a minimum and maximum distance. For example, the linearly extendable elements may comprise telescopic cylinders. The linearly extendable elements may be provided with damping characteristics.

In a particular embodiment a first end of the motion limiter of the first coupling is mounted to the first support at one of the first and second pivot which has the single pivot point and an opposite second end is mounted to one of the central frame and the satellite frame at a distance from the at least one pivot axis of the other one of the first and second pivot and/or a first end of the motion limiter of the second coupling is mounted to the second support at one of the third and fourth pivot which has the single pivot point and an opposite second end is mounted to one of the central frame and the satellite frame at a distance from the at least one pivot axis of the other one of the third and fourth pivot. This means, for example, that if the first end of the motion limiter of the first coupling is mounted to the first support at the second pivot, i.e. located at the side of the satellite frame and including a single pivot point, its second end is mounted to the central frame at a location which is remote from the pivot axis or pivot point of the first pivot. In this case, the first coupling takes more space at the side of the central frame than at the side of the satellite frame.

Each of the first and second couplings may have more than one motion limiter.

A line along which at least one of the linearly extendable elements is extendable may be parallel to the main plane when the central frame and the satellite frame lie in the main plane. This line may have a different orientation in case the central frame and the satellite frame are displaced with respect to each other.

In an embodiment the first end of the motion limiter of the first coupling is mounted to the first support at the second pivot which has the single pivot point and the second end is mounted to the central frame at a distance from the at least one pivot axis of the first pivot and wherein the first end of the motion limiter of the second coupling is mounted to the second support at the fourth pivot which has the single pivot point and the second end is mounted to the satellite frame at a distance from the at least one pivot axis of the third pivot, and wherein the first and second couplings are mounted to each of the side edges of the central frame. This means that when preparing the frames two types of frames can be configured: central frames including the pairs of the first and second couplings along its side edges and satellite frames which are free from the pairs of the first and second couplings. At the destined location of the structure, the two types of frames can be coupled to each other.

In an alternative embodiment the first end of the motion limiter of the first coupling is mounted to the first support at the second pivot which has the single pivot point and the second end is mounted to the central frame at a distance from the at least one pivot axis of the first pivot and wherein the first end of the motion limiter of the second coupling is mounted to the second support at the third pivot which has the single pivot point and the second end is mounted to the satellite frame at a distance from the at least one pivot axis of the fourth pivot. In this case the motion limiter of the first coupling is mounted to the central frame at a distance from the at least one pivot axis of the first pivot, whereas the motion limiter of the second coupling is mounted to the satellite frame at a distance from the at least one pivot axis of the fourth pivot. This means that the frames to be prepared may be identical. At each side edge, of both the central frame as the satellite frame, the first coupling may be mounted such that in assembled condition the pair of the first and second couplings arise at each of the adjacent side edges. An advantage of this embodiment is that identical frames can be prepared.

The articulated structure may be a floating structure. The pairs of couplings between the central frame and each of the satellite frames appear to allow the floating structure to follow an irregular water surface appropriately. It is noted that the central frame and the satellite frames extend in a common main plane in case of a calm sea.

The invention will hereafter be elucidated with reference to very schematic drawings showing embodiments of the invention by way of example.
Fig. 1 is a plan view of a part of an embodiment of an articulated structure according to the invention.
Fig. 2 is a perspective view of a part of the embodiment as shown in Fig. 1.
Fig. 3 is an enlarged view of a part of the embodiment as shown in Fig. 2.
Fig. 4 is a similar view as Fig. 2, illustrating a motion of the articulated structure.
Fig. 5 is an illustrative view of a pair of couplings between neighbouring frames of the articulated structure as shown in Fig. 1.
Fig. 6 is a perspective view of an articulated structure, of which a part is shown in Fig. 1, illustrating the structure as a floating structure on a water surface.
Fig. 7 is a similar view as Fig. 6, but illustrating a different condition of the floating structure.
Figs. 8-16 are similar views as Fig. 5, but showing couplings of alternative embodiments of articulated structures.
Figs. 17-20 are similar views as Fig. 1, but showing alternative embodiments.

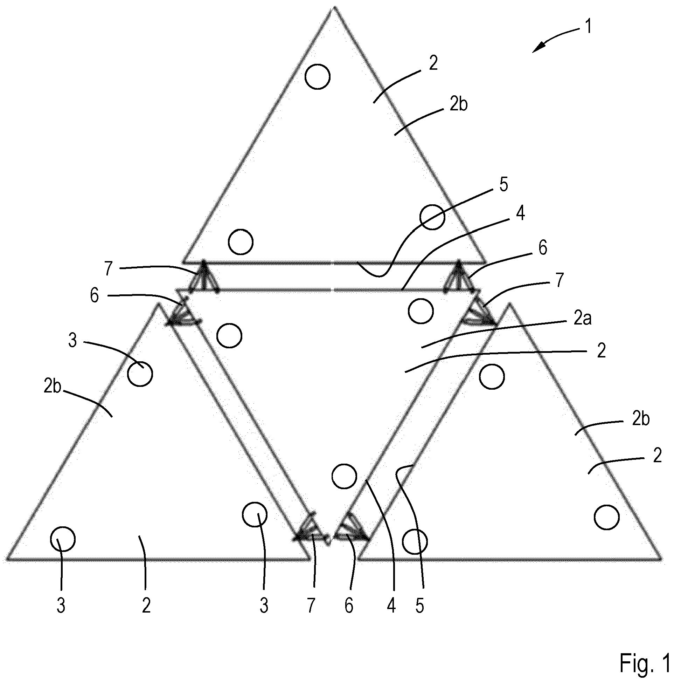

Fig. 1 shows a part of an embodiment of an articulated structure 1 according to the invention, in this case an articulated floating structure 1 which is suitable for inshore or off-shore applications. The articulated floating structure 1 has a plurality of discrete equilateral triangular frames 2 as seen from above. Four frames 2 of the articulated structure 1 are shown in Fig. 1. The frames 2 have the same dimensions in this case, but different dimensions are conceivable. Each of the frames 2 is provided with buoyant members 3 which allows the articulated floating structure 1 to float on the water surface. The frames 2 extend in a common main plane in case of a calm sea. Each of them is provided with PV panels (not shown) for generating electrical power.

The articulated floating structure 1 has at least one central frame 2a which is surrounded by three satellite frames 2b, which is illustrated in Fig. 1. The central frame 2a has three substantially linear side edges 4 and each of the satellite frames 2b has three substantially linear side edges 5, as seen from above. Each of the side edges 4 of the central frame 2a is adjacent to and extends substantially parallel to respective side edges 5 of the satellite frames 2b, hence forming three pairs of two adjacent side edges 4, 5 of the central frame 2a and the respective satellite frames 2b. Fig. 1 shows that along each pair of two adjacent side edges 4, 5 a first coupling 6 and a second coupling 7 between the central frame 2a and the satellite frame 2b are located at a distance from each other. Hence, each of the satellite frames 2b is coupled to the central frame 2a by one pair of the first and second couplings 6, 7. In an alternative embodiment additional couplings may be provided.

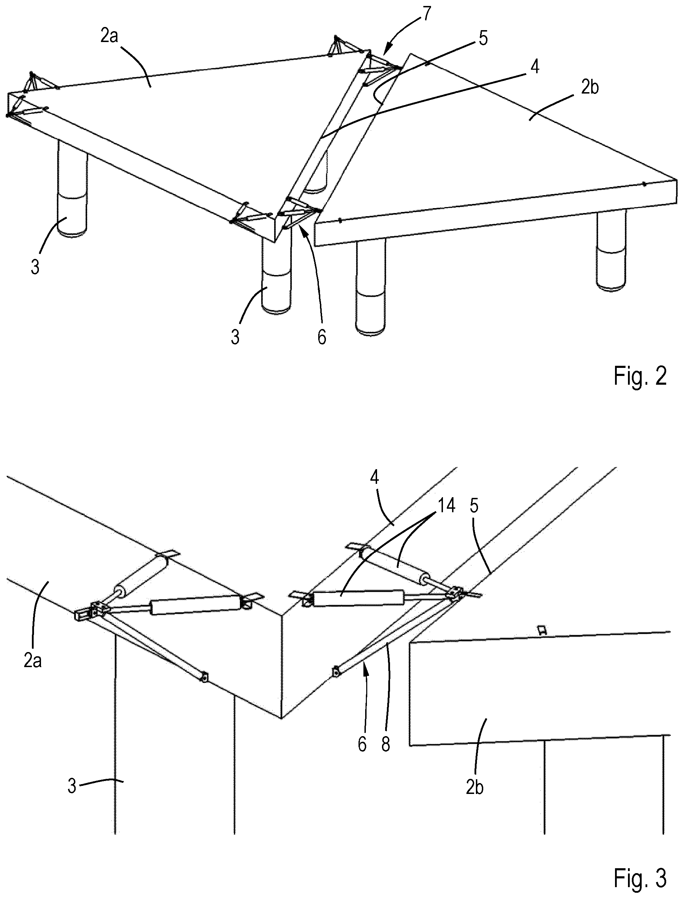

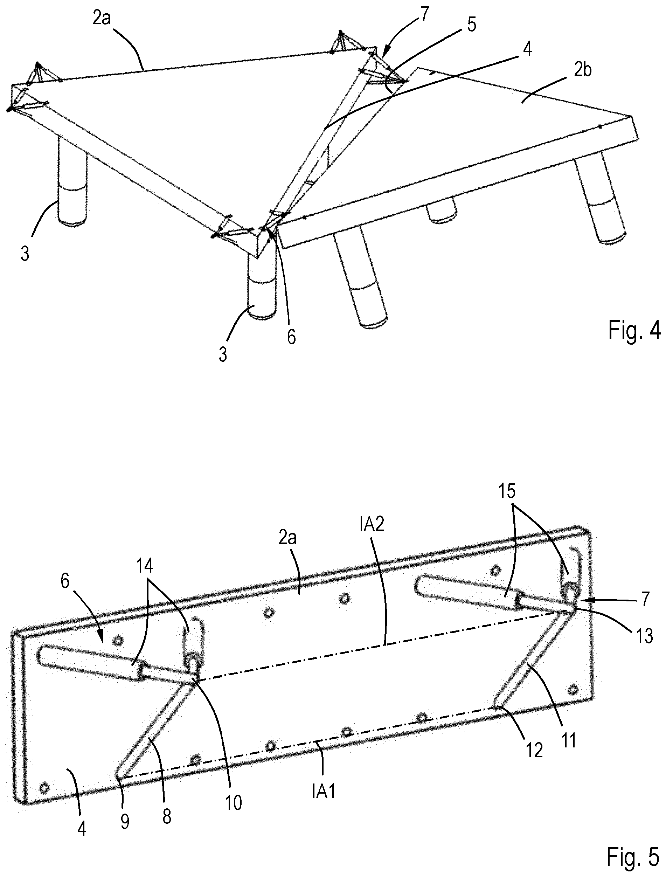

Figs. 2 and 3 show the central frame 2a and one of the satellite frames 2b in more detail. Fig. 4 illustrates a condition in which the central frame 2a and the satellite frame 2b have different positions and orientations with respect to each other. Fig. 5 shows the first coupling 6 and the second coupling 7 in a schematic way.

Referring to Figs. 3 and 5, the first and second couplings 6, 7 are the same in this embodiment. They are mounted symmetrically with respect to a plane of symmetry which extends perpendicularly to the main plane and perpendicularly to the side edge 4 of the central frame 2a. The first coupling 6 comprises a first rigid support in the form of a first rod 8 which is mounted to the central frame 2a through a first pivot in the form of a first ball joint 9 and to the satellite frame 2b through a second pivot in the form of a second ball joint 10. Similarly, the second coupling 7 comprises a second rigid support in the form of a second rod 11 which is mounted to the central frame 2a through a third pivot in the form of a third ball joint 12 and to the satellite frame 2b through a fourth pivot in the form of a fourth ball joint 13. The distance between pivot points of the first and third ball joints 9, 12 as well as between pivot points of the second and fourth ball joints 10, 13 are fixed; in this case the distances are the same. Furthermore, the distances between the pivot points of the first and second ball joints 9, 10 and between the pivot points of the third and fourth ball joints 12, 13 are the same. When the central frame 2a and the satellite frame 2b extend in the common plane as shown in Fig. 2, i.e. in case of a calm sea, the first and second rods 8, 11 extend parallel to each other and they are angled with respect to the main plane and a plane that extends perpendicularly to the main plane and parallel to the adjacent side edges 4, 5 of the central frame 2a and the satellite frame 2b.

The first and second couplings 6, 7 as shown in Fig. 5 create a first imaginary axis of rotation IA1 between the central frame 2a and the satellite frame 2b through the pivot points of the first and third ball joints 9, 12 and a second imaginary axis of rotation IA2 through the pivot points of the second and fourth ball joints 10, 13, respectively. When the central frame 2a and the satellite frame 2b extend in the common plane as shown in Fig. 2 the first and second imaginary axes IA1, IA2, are parallel to each other. They remain parallel to each other when the central frame 2a and the satellite frame 2b move with respect to each other in translative directions perpendicularly to the main plane or within the main plane and perpendicularly to the adjacent side edges 4, 5 or within the main plane and parallel to the adjacent side edges 4, 5 or when the central frame 2a and the satellite frame 2b rotate with respect to each other about the first or second imaginary axes of rotation IA1, IA2. Each of the translative motions automatically lead to relative translative motions of the central frame 2a and the satellite frame 2b in different directions because of the presence of the rigid first and second rods 8, 11.

When the central frame 2a and the satellite frame 2b rotate with respect to each other about an axis which extends perpendicularly to the main plane or an axis which extends within the main plane and perpendicularly to the adjacent sides edges 4, 5 the first and second imaginary axis of rotation will be angled with respect to each other. These rotations automatically lead to other mutual motions of the central frame 2a and the satellite frame 2b because of the presence of the rigid first and second rods 8, 11. A combination of such mutual motions is illustrated in Fig. 4. Due to the configuration of the first and second couplings 6, 7 as shown in Fig. 5 a mutual rotation of the central frame 2a and the satellite frame 2b about the first and second imaginary axes of rotation IA1, IA2 remains possible without introducing other relative motions of the central frame 2a and the satellite frame 2b.

The first and second rods 8, 11 prevent the central frame 2a and the satellite frame 2b from easily bouncing against each other. Additionally, the first and second couplings 6, 7 are provided with motion limiters in the form of pairs of linearly extendable elements 14, 15 in order to minimize the risk of collisions between the central frame 2a and the satellite frames 2b. In this case the linearly extendable elements 14, 15 comprise telescopic cylinders, but alternative embodiments are conceivable. In the situation as shown in Fig. 5 the extendable elements lie in a plane which is parallel to the main plane in case of a calm sea. Each pair of extendable elements 14, 15 is arranged in a V-shape, such that they form tripods together with the first and second rods 8, 11, respectively. Opposite ends of each element 14, 15 are pivotably mounted to the central frame 2a and the satellite frame 2b, respectively, through joints which have single pivot points. Fig. 5 shows that first ends of the respective extendable elements 14, 15 are located at the second and fourth ball joints 10, 13, i.e. at the side of the satellite frame 2b whereas opposite second ends are mounted to the central frame 2a. The second ends of each of the first and second coupling 6, 7 are mounted at locations which are remote from each other and from the pivot points of the first and third pivots 9, 12, respectively. Each of the extendable elements 14, 15 has a retracted condition and an extended condition, hence forming the motion limiters. The extendable elements 14, 15 may also have damping characteristics and may comprise gas springs, for example.

The extendable elements 14, 15 limit the following relative motions of the central frame 2a and the satellite frame 2b: a displacement in a direction extending perpendicularly to the main plane, a rotation about an axis extending perpendicularly to the main plane, a displacement in a direction extending perpendicularly to the adjacent side edges 4, 5 and parallel to the main plane, a rotation about an axis extending perpendicularly to the adjacent side edges 4, 5 and parallel to the main plane and a displacement in a direction extending parallel to the adjacent side edges 4, 5 and the main plane. In this case the extendable elements 14, 15 do not limit a rotation about the first and second imaginary axes of rotation IA1, IA2. Of course, the first and second rods 8, 11 also limit certain motions between the central frame 2a and the satellite frame 2b.

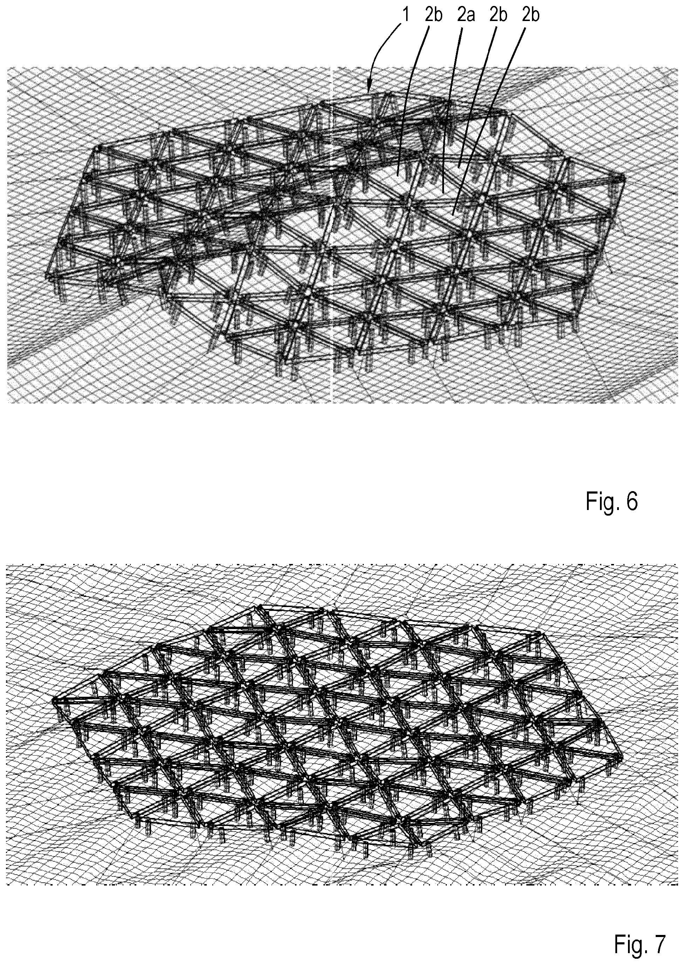

As described hereinbefore, Fig. 1 shows a part of the articulated structure 1. Figs. 6 and 7 show the entire floating structure 1 which is provided with much more triangular frames 2 than shown in Fig. 1. Figs. 6 and 7 illustrate conditions of the floating structure 1 on a water surface in case of different wave patterns, which is based on computer simulations. The floating structure 1 is provided with a plurality of pairs of the first and second couplings 6, 7 between respective adjacent side edges 4, 5 of neighbouring frames 2, as described hereinbefore. These figures show that the first and second couplings 6, 7 allow the floating structure 1 to follow the actual bidirectional curved water surface. More particularly, the floating structure 1 takes a similar shape as the actual water surface.

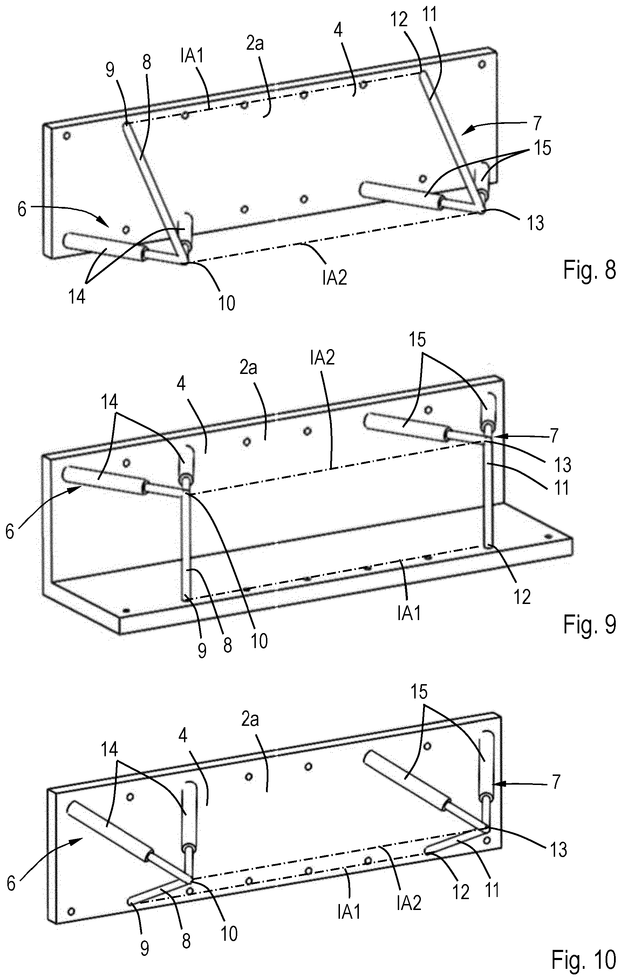

Figs. 8-16 show pairs of the first and second couplings 6, 7 of alternative embodiments of the articulated floating structure 1. Elements in these embodiment which correspond to elements in the embodiment as shown in Fig. 5 have the same reference sign.

In the embodiment as shown in Fig. 8 the first and second couplings 6, 7 are mirrored in the main plane with respect to the embodiment as shown in Fig. 5. An advantage of the embodiment as shown in Fig. 5 is that the extendable elements 14, 15 have a higher position with respect to the water surface such that corrosion effects are smaller.

Fig. 9 shows a pair of the first and second couplings 6, 7 in which the rods 8, 11 extend perpendicularly to the main plane. In this embodiment a relative translative motion between the central frame 2a and the satellite frame 2b in a direction perpendicular to the main plane and a rotational motion about an axis extending within the main plane and perpendicularly to the adjacent side edges 4, 5 is obstructed. In other words, in a plane which extends perpendicularly to the main plane and parallel to the adjacent side edges 4, 5 the first and second imaginary axes of rotation IA1, IA2 are only movable parallel to each other. The embodiment as shown in Fig. 9 allows for easy transfer of people and/or cables between the central frame 2a and the satellite frame 2b because of the obstruction of the relative motion in a direction perpendicularly to the main plane.

Fig. 10 shows a pair of the first and second couplings 6, 7, which differ from the embodiment as shown in Fig. 5 in that the extendable elements 14, 15 lie in a plane which is angled with respect to the main plane. In this embodiment forces are distributed in the first and second couplings 6, 7 relatively evenly.

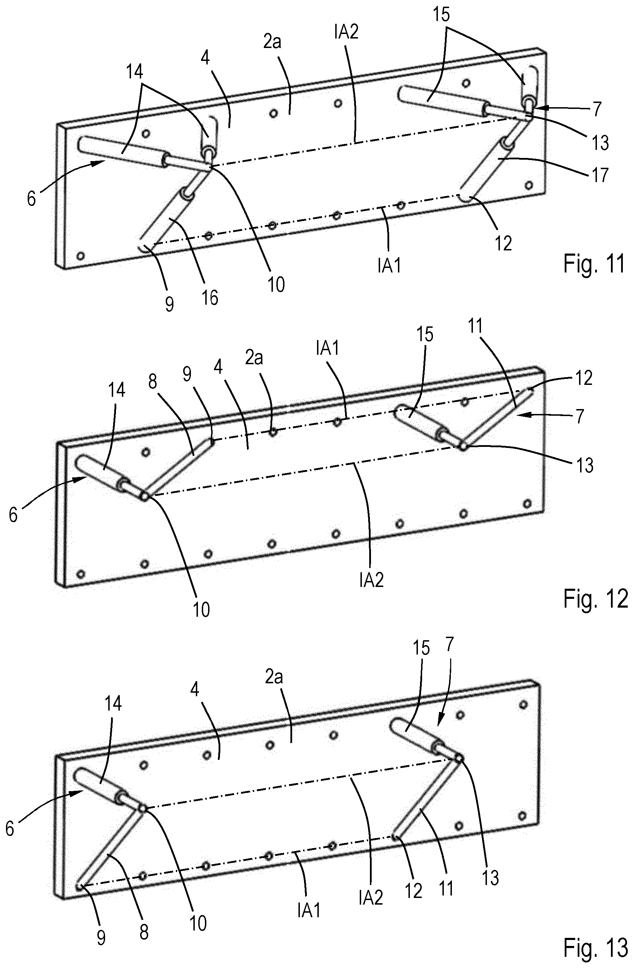

Fig. 11 shows an alternative embodiment which is comparable to the embodiment as shown in Fig. 5, but in which the first and second rods 8, 9 are replaced with linearly extendable supports 16, 17. The first and second couplings 6, 7 as shown in Fig. 11 provide more freedom of relative motion of the central frame 2a and the satellite frame 2b than the first and second couplings 6, 7 as shown in Fig. 5, since the first and second imaginary axes of rotation IA1, IA2 can also move with respect to each other whereas remaining parallel to each other.

Figs. 12 and 13 show simplified embodiments in which the first and second couplings 6, 7 comprise respective single motion limiters in the form of the linearly extendable elements 14, 15.

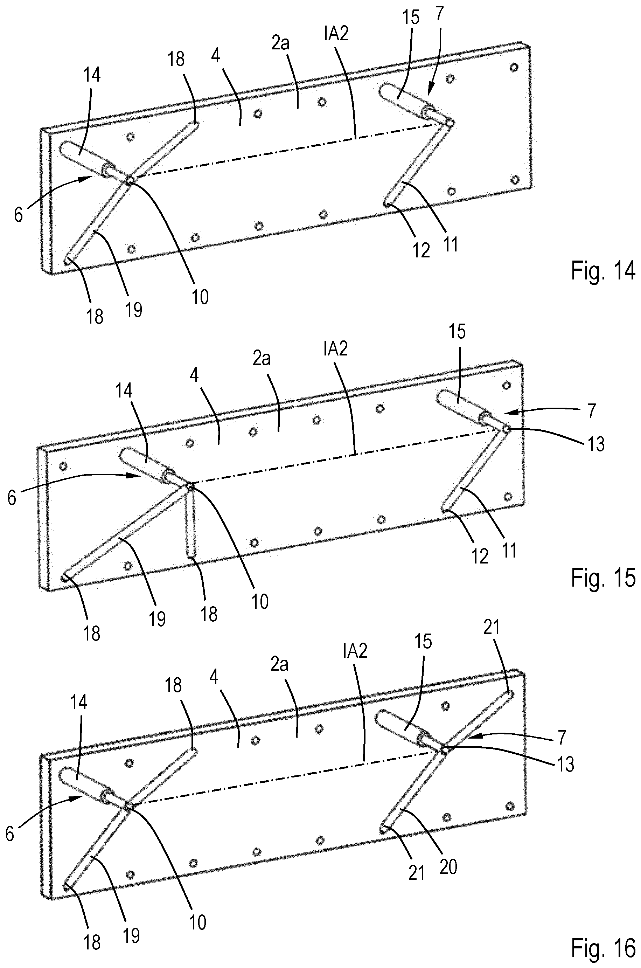

In the embodiment as shown in Fig. 14 the first coupling 6 has a first pivot in the form of two hinges 18 including a common pivot axis and a single motion limiting element 14. The single motion limiting element 14 can be mounted to the central frame 2a and the satellite frame 2b through joints which have a single pivot axis, respectively. The first support is in the form of a V-shaped frame 19. The second coupling 7 is similar to that in the embodiment as shown in Fig. 13. This embodiment also has the second imaginary axis of rotation IA2. The simplified embodiment provides less degrees of freedom than the embodiments as shown in Figs. 5 and 8-13, since the V-shaped frame 19 including the second ball joint 10 is only rotatable about the common pivot axis of the two hinges 18.

Fig. 15 shows a variant to the embodiment as shown in Fig. 14, wherein the first and second couplings 6, 7 are mounted to the central frame 2a and the satellite frame 2b at different locations.

The embodiment as shown in Fig. 16 is further simplified with respect to the embodiment as shown in Fig. 14. The second support is also provided in the form of a V-shaped frame 20 which is pivotably mounted to the central frame 2a through two hinges 21 which have a common pivot axis. The common pivot axis of the hinges 18 at the first coupling 6 and the common pivot axis of the hinges 21 at the second coupling 7 are parallel to each other. The second imaginary axis of rotation IA2 is only movable parallel to itself. It is also possible to incorporate a displacement mechanism, for example a sliding structure, in order to allow the pivot points of the second and fourth ball joints 10, 13 to displace with respect to each other. In the latter case the orientation of the second imaginary axis of rotation IA2 may vary with respect to the main plane.

It is noted that a lot of variants are conceivable without obstructing a relative rotational motion of the central frame 2a and the satellite frame 2b about an axis which is parallel to the main plane and the adjacent side edges of the central frame 2a and the satellite frame 2b.

Referring to Figs. 1 and 5 it can be observed that a first end of each of the motion limiters 14 of the first coupling 6 is mounted to the first support 8 at the second pivot 10 and an opposite second end is mounted to the central frame 2a at a distance from the pivot point of the first pivot 9; furthermore, a first end of each of the motion limiters 15 of the second coupling 7 is mounted to the second support 11 at the fourth pivot 13 and an opposite second end is mounted to the central frame 2a at a distance from the pivot point of the third pivot 12. This means that the thus formed tripods of the first and second couplings 6, 7 take more space at the side edge 4 of the central frame 2a than at the adjacent side edge 5 of the satellite frame 2b. When preparing the floating structure 1 for transport to and assembly at a destination on the water surface the pairs of the first and second couplings 6, 7 may already be mounted to the respective side edges 4 of the central frame 2a such that at the destination the pairs of the first and second couplings 6, 7 can be coupled to the satellite frames 2b. In case of the embodiment as shown in Fig. 1, this means that there are two types of prepared frames 2: frames 2b without any first and second couplings 6, 7 and frames 2a which are provided with the pairs of the first and second couplings 6, 7 at their respective side edges 4. However, there are several alternative possibilities of prepared frames 2.

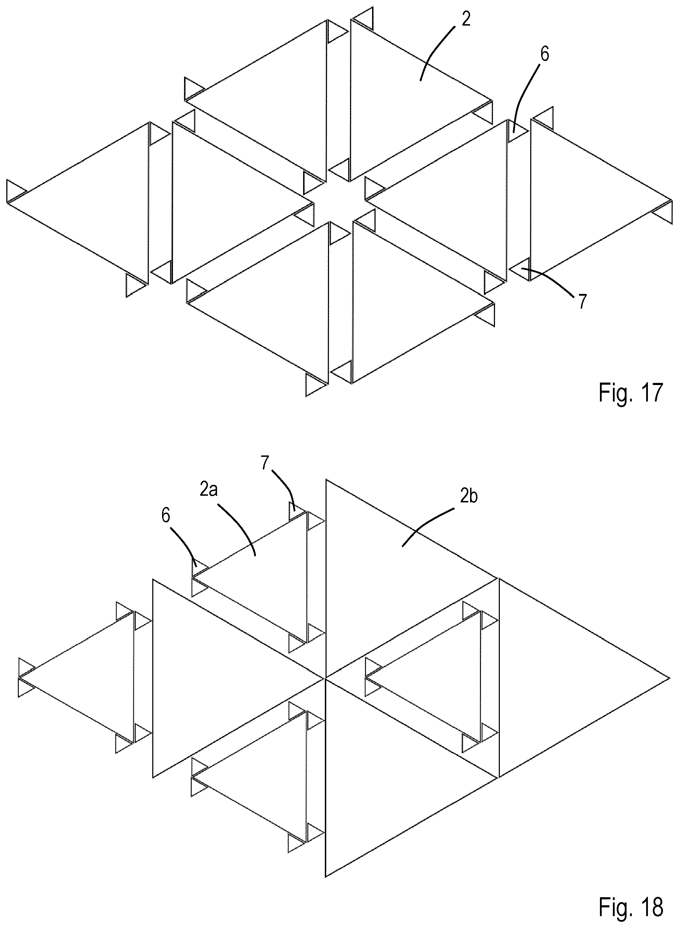

Fig. 17 shows an alternative embodiment in which each of the prepared frames 2 is identical. At each side edge 4, 5 of the respective frames 2 one of the first and second couplings 6, 7 is provided. In assembled condition as shown in Fig. 17 neighbouring frames are coupled to each other through the first and second couplings 6, 7. An advantage of this embodiment is that only one type of frames 2 may be prepared.

Fig. 18 shows still another alternative embodiment in which two different types of frames 2 are applied: frames 2b without any first and second couplings 6, 7 and frames 2a which are provided with the pairs of the first and second couplings 6, 7 at their respective side edges 4, whereas the latter frames 2a are smaller than the former frames 2b.

The invention is not limited to the embodiments shown in the drawings and described hereinbefore, which may be varied in different manners within the scope of the claims.

## Claims

1. An articulated structure (1), comprising a central frame (2a) and at least three satellite frames (2b) surrounding the central frame (2a), wherein the central frame (2a) and the satellite frames (2b) extend in a common main plane and each of the satellite frames (2b) is coupled to the central frame (2a) by a pair of couplings (6, 7), of which a first coupling (6) comprises a first support (8, 16, 19) that is mounted to the central frame (2a) through a first pivot (9, 18) and to the satellite frame (2b) through a second pivot (10), and of which a second coupling (7) comprises a second support (11, 17, 20) that is mounted to the central frame (2a) through a third pivot (12, 21) and to the satellite frame (2b) through a fourth pivot (13), **characterized in that** at least one of the first and second pivots has a single pivot point, such as a ball joint, and the other one of the first and second pivots has at least one pivot axis, wherein at least one of the third and fourth pivots has a single pivot point, such as a ball joint, and the other one of the third and fourth pivots has at least one pivot axis, hence forming an imaginary axis of rotation (IA1, IA2) through the pivot point of one of the first and second pivot and the pivot point of one of the third and fourth pivot.

2. An articulated structure (1) according to claim 1, wherein the central frame (2a) has at least three side edges (4), which are adjacent to respective side edges (5) of the at least three satellite frames (2b), wherein along each of two adjacent side edges (4, 5) of the central frame (2a) and the respective satellite frames (2b) the first and second couplings (6, 7) are located at a distance from each other.

3. An articulated structure (1) according to claim 2, wherein each of the central frame (2a) and the satellite frames (2b) has three side edges (4, 5) which form a triangle within the main plane.

4. An articulated structure (1) according to any one of the preceding claims, wherein each of the first pivot (9) and the second pivot (10) has a single pivot point.

5. An articulated structure (1) according to claim 4, wherein each of the third pivot (12) and fourth pivot (13) has a single pivot point.

6. An articulated structure (1) according to claim 5, wherein the distance between the pivot points of the first and third pivots (9, 12) is fixed and the distance between the pivot points of the second and fourth pivots (10, 13) is fixed.

7. An articulated structure (1) according to any one of the preceding claims, wherein at least one of the first and second supports (8, 11) is rigid.

8. An articulated structure (1) according to any one of the preceding claims, wherein the distance between the pivot point of one of the first and second pivots (9, 10) and the at least one pivot axis of the other one of the first and second pivots (9, 10, 18) is equal to the distance between the pivot point of one of the third and fourth pivots (12, 13) and the at least one pivot axis of the other one of the third and fourth pivots (12, 13, 21).

9. An articulated structure (1) according to any one of the preceding claims, wherein the first and second couplings (6, 7) are provided with respective motion limiters (14, 15) for limiting at least one of the following relative motions of the central frame (2a) and each of the satellite frames (2b):
a displacement in a direction extending perpendicularly to the main plane,
a rotation about an axis extending perpendicularly to the main plane,
a displacement in a direction extending parallel to the main plane and transversely with respect to the imaginary axis of rotation (IA1, IA2),
a rotation about an axis extending parallel to the main plane and transversely with respect to the imaginary axis of rotation (IA1, IA2),
a displacement along the imaginary axis of rotation (IA1, IA2), and
a rotation about the imaginary axis of rotation (IA1, IA2).

10. An articulated structure (1) according to claim 9, wherein the motion limiters comprise linearly extendable elements (14, 15), wherein opposite ends of each element (14, 15) are pivotably mounted to the respective frames (2a, 2b) and movable with respect to each other between a minimum and maximum distance.

11. An articulated structure (1) according to claim 10, wherein a first end of the motion limiter (14) of the first coupling (6) is mounted to the first support (8, 16, 19) at one of the first and second pivot (9, 10) which has the single pivot point and an opposite second end is mounted to one of the central frame (2a) and the satellite frame (2b) at a distance from the at least one pivot axis of the other one of the first and second pivot (9, 10, 18), and/or wherein a first end of the motion limiter (15) of the second coupling (7) is mounted to the second support (11, 17, 20) at one of the third and fourth pivot (12, 13) which has the single pivot point and an opposite second end is mounted to one of the central frame (2a) and the satellite frame (2b) at a distance from the at least one pivot axis of the other one of the third and fourth pivot (12, 13, 21).

12. An articulated structure (1) according to claim 10 or 11, wherein a line along which at least one of the linearly extendable elements (14, 15) is extendable is parallel to the main plane when the central frame (2a) and the satellite frame (2b) lie in the main plane.

13. An articulated structure (1) according to claim 11 or 12 and to claim 2, wherein the first end of the motion limiter (14) of the first coupling (6) is mounted to the first support (8, 16, 19) at the second pivot (10) which has the single pivot point and the second end is mounted to the central frame (2a) at a distance from the at least one pivot axis of the first pivot (9, 18) and wherein the first end of the motion limiter (15) of the second coupling (7) is mounted to the second support (11, 17, 20) at the fourth pivot (13) which has the single pivot point and the second end is mounted to the satellite frame (2b) at a distance from the at least one pivot axis of the third pivot (12, 21), and wherein the first and second couplings (6, 7) are mounted to each of the side edges of the central frame (2a).

14. An articulated structure (1) according to claim 11 or 12 and to claim 2, wherein the first end of the motion limiter (14) of the first coupling (6) is mounted to the first support (8, 16, 19) at the second pivot (10) which has the single pivot point and the second end is mounted to the central frame (2a) at a distance from the at least one pivot axis of the first pivot (9, 18) and wherein the first end of the motion limiter (15) of the second coupling (7) is mounted to the second support at the third pivot which has the single pivot point and the second end is mounted to the satellite frame (2b) at a distance from the at least one pivot axis of the fourth pivot.

15. An articulated structure (1) according to any one of the preceding claims, wherein the articulated structure is a floating structure (1).

## Patentansprüche

1. Gelenkstruktur (1), aufweisend einen Zentralrahmen (2a) und mindestens drei Satellitenrahmen (2b), die den Zentralrahmen (2a) umgeben, wobei sich der Zentralrahmen (2a) und die Satellitenrahmen (2b) in einer gemeinsamen Hauptebene erstrecken und jeder der Satellitenrahmen (2b) über ein Paar Kupplungen (6, 7) mit dem Zentralrahmen (2a) verbunden ist, von denen eine erste Kupplung (6) eine erste Halterung (8, 16, 19) aufweist, die über ein erstes Drehgelenk (9, 18) am Zentralrahmen (2a) und über ein zweites Drehgelenk (10) am Satellitenrahmen (2b) angebracht ist, und von denen eine zweite Kupplung (7) eine zweite Halterung (11, 17, 20) aufweist, der über ein drittes Drehgelenk (12, 21) am Zentralrahmen (2a) und über ein viertes Drehgelenk (13) am Satellitenrahmen (2b) angebracht ist, **dadurch gekennzeichnet, dass** mindestens eines von dem ersten und dem zweiten Drehgelenk einen Einzeldrehpunkt hat, wie beispielsweise ein Kugelgelenk, und das andere von dem ersten und dem zweiten Drehgelenk mindestens eine Drehachse hat, wobei mindestens eines von dem dritten und dem vierten Drehgelenk einen Einzeldrehpunkt hat, wie beispielsweise ein Kugelgelenk, und das andere von dem dritten und dem vierten Drehgelenk mindestens eine Drehachse hat, wodurch eine imaginäre Drehachse (IA1, IA2) durch den Drehpunkt von einem von dem ersten und dem zweiten Drehgelenk und den Drehpunkt von einem von dem dritten und dem vierten Drehgelenk gebildet wird.

2. Gelenkstruktur (1) gemäß Anspruch 1, wobei der Zentralrahmen (2a) mindestens drei Seitenränder (4) hat, die an jeweilige Seitenränder (5) der mindestens drei Satellitenrahmen (2b) angrenzen, wobei entlang jedem der beiden angrenzenden Seitenränder (4, 5) des Zentralrahmens (2a) und der jeweiligen Satellitenrahmen (2b) die erste und die zweite Kupplung (6, 7) in einem Abstand voneinander angeordnet sind.

3. Gelenkstruktur (1) gemäß Anspruch 2, wobei jeder von dem Zentralrahmen (2a) und den Satellitenrahmen (2b) drei Seitenränder (4, 5) hat, die innerhalb der Hauptebene ein Dreieck bilden.

4. Gelenkstruktur (1) gemäß irgendeinem der vorstehenden Ansprüche, wobei jedes von dem ersten Drehgelenk (9) und dem zweiten Drehgelenk (10) einen Einzeldrehpunkt hat.

5. Gelenkstruktur (1) gemäß Anspruch 4, wobei jedes von dem dritten Drehgelenk (12) und dem vierten Drehgelenk (13) einen Einzeldrehpunkt hat.

6. Gelenkstruktur (1) gemäß Anspruch 5, wobei der Abstand zwischen den Drehpunkten des ersten und des dritten Drehgelenks (9, 12) fest ist und der Abstand zwischen den Drehpunkten des zweiten und des vierten Drehgelenks (10, 13) fest ist.

7. Gelenkstruktur (1) gemäß irgendeinem der vorstehenden Ansprüche, wobei mindestens eine von der ersten und der zweiten Halterung (8, 11) starr ist.

8. Gelenkstruktur (1) gemäß irgendeinem der vorstehenden Ansprüche, wobei der Abstand zwischen dem Drehpunkt des einen von dem ersten und dem zweiten Drehgelenk (9, 10) und der mindestens einen Drehachse des anderen von dem ersten und dem zweiten Drehgelenk (9, 10, 18) gleich dem Abstand zwischen dem Drehpunkt eines von dem dritten und dem vierten Drehgelenk (12, 13) und der mindestens einen Drehachse des anderen von dem dritten und dem vierten Drehgelenk (12, 13, 21) ist.

9. Gelenkstruktur (1) gemäß irgendeinem der vorstehenden Ansprüche, wobei die erste und die zweite Kupplung (6, 7) mit jeweiligen Bewegungsbegrenzern (14, 15) versehen sind, um mindestens eine der folgenden Relativbewegungen des Zentralrahmens (2a) und jedes der Satellitenrahmen (2b) zu begrenzen:
eine Verschiebung in einer Richtung, die senkrecht zur Hauptebene verläuft,
eine Drehung um eine Achse, die senkrecht zur Hauptebene verläuft,
eine Verschiebung in einer Richtung, die parallel zur Hauptebene und quer zur imaginären Drehachse (IA1, IA2) verläuft,
eine Drehung um eine Achse, die parallel zur Hauptebene und
quer zur imaginären Drehachse (IAI, IA2) verläuft,
eine Verschiebung entlang der imaginären Drehachse (IA1, IA2) und
eine Drehung um die imaginäre Drehachse (IA1, IA2).

10. Gelenkstruktur (1) gemäß Anspruch 9, wobei die Bewegungsbegrenzer linear ausfahrbare Elemente (14, 15) aufweisen, wobei entgegengesetzte Enden jedes Elements (14, 15) schwenkbar an den jeweiligen Rahmen (2a, 2b) angebracht sind und relativ zueinander zwischen einem Minimal- und einem Maximalabstand bewegbar sind.

11. Gelenkstruktur (1) gemäß Anspruch 10, wobei ein erstes Ende des Bewegungsbegrenzers (14) der ersten Kupplung (6) an der ersten Halterung (8, 16, 19) an einem von dem ersten und dem zweiten Drehgelenk (9, 10) angebracht ist, das den Einzeldrehpunkt hat, und ein entgegengesetztes, zweites Ende an einem von dem Zentralrahmen (2a) und dem Satellitenrahmen (2b) in einem Abstand von der mindestens einen Drehachse des anderen von dem ersten und dem zweiten Drehgelenk (9, 10, 18) angebracht ist, und/oder wobei ein erstes Ende des Bewegungsbegrenzers (15) der zweiten Kupplung (7) an der zweiten Halterung (11, 17, 20) an einem von dem dritten und dem vierten Drehgelenk (12, 13) angebracht ist, das den Einzeldrehpunkt hat, und ein entgegengesetztes, zweites Ende an einem von dem Zentralrahmen (2a) und dem Satellitenrahmen (2b) in einem Abstand von der mindestens einen Drehachse des anderen von dem dritten und dem vierten Drehpunkt (12, 13, 21) angebracht ist.

12. Gelenkstruktur (1) gemäß Anspruch 10 oder 11, wobei eine Linie, entlang welcher mindestens eines von den linear ausfahrbaren Elementen (14, 15) ausfahrbar ist, parallel zur Hauptebene verläuft, wenn der Zentralrahmen (2a) und der Satellitenrahmen (2b) in der Hauptebene liegen.

13. Gelenkstruktur (1) gemäß Anspruch 11 oder 12 und gemäß Anspruch 2, wobei das erste Ende des Bewegungsbegrenzers (14) der ersten Kupplung (6) an der ersten Halterung (8, 16, 19) an dem zweiten Drehgelenk (10) angebracht ist, das den Einzeldrehpunkt hat, und das zweite Ende an dem Zentralrahmen (2a) in einem Abstand von der mindestens einen Drehachse des ersten Drehgelenks (9, 18) angebracht ist, und wobei das erste Ende des Bewegungsbegrenzers (15) der zweiten Kupplung (7) an der zweiten Halterung (11, 17, 20) an dem vierten Drehgelenk (13) angebracht ist, das den Einzeldrehpunkt aufweist, und das zweite Ende an dem Satellitenrahmen (2b) in einem Abstand von der mindestens einen Drehachse des dritten Drehgelenks (12, 21) angebracht ist, und wobei die erste und die zweite Kupplung (6, 7) an jedem der Seitenränder des Zentralrahmens (2a) angebracht sind.

14. Gelenkstruktur (1) gemäß Anspruch 11 oder 12 und gemäß Anspruch 2, wobei das erste Ende des Bewegungsbegrenzers (14) der ersten Kupplung (6) an der ersten Halterung (8, 16, 19) an dem zweiten Drehgelenk (10) angebracht ist, das den Einzeldrehpunkt hat, und das zweite Ende an dem Zentralrahmen (2a) in einem Abstand von der mindestens einen Drehachse des ersten Drehgelenks (9, 18) angebracht ist, und wobei das erste Ende des Bewegungsbegrenzers (15) der zweiten Kupplung (7) an der zweiten Halterung an dem dritten Drehgelenk angebracht ist, das den Einzeldrehpunkt hat, und das zweite Ende an dem Satellitenrahmen (2b) in einem Abstand von der mindestens einen Drehachse des vierten Drehgelenks angebracht ist.

15. Gelenkstruktur (1) gemäß irgendeinem der vorstehenden Ansprüche, wobei die Gelenkstruktur eine schwimmende Struktur (1) ist.

## Revendications

1. Structure articulée (1), comprenant un châssis central (2a) et au moins trois châssis satellites (2b) entourant le châssis central (2a), dans laquelle le châssis central (2a) et les châssis satellites (2b) s'étendent dans un plan principal commun et chacun des châssis satellites (2b) est couplé au châssis central (2a) par une paire d'accouplements (6, 7), dont un premier accouplement (6) comprend un premier support (8, 16, 19) qui est monté sur le châssis central (2a) par un premier pivot (9, 18) et sur le châssis satellite (2b) par un deuxième pivot (10), et dont un second accouplement (7) comprend un second support (11, 17, 20) qui est monté sur le châssis central (2a) par un troisième pivot (12, 21) et au châssis satellite (2b) par un quatrième pivot (13), **caractérisée en ce qu'**au moins l'un des premier et deuxième pivots présente un seul point de pivotement, tel qu'une rotule, et l'autre des premier et deuxième pivots présente au moins un axe de pivotement, dans laquelle au moins l'un des troisième et quatrième pivots présente un seul point de pivotement, tel qu'une rotule, et l'autre des troisième et quatrième pivots présente au moins un axe de pivotement, formant ainsi un axe de rotation imaginaire (IA1, IA2) à travers le point de pivotement de l'un des premier et deuxième pivots et le point de pivotement de l'un des troisième et quatrième pivots.

2. Structure articulée (1) selon la revendication 1, dans laquelle le châssis central (2a) présente au moins trois bords latéraux (4), qui sont adjacents à des bords latéraux respectifs (5) des au moins trois châssis satellites (2b), dans laquelle le long de chacun de deux bords latéraux adjacents (4, 5) du châssis central (2a) et des châssis satellites respectifs (2b) les premier et second accouplements (6, 7) sont situés à distance l'un de l'autre.

3. Structure articulée (1) selon la revendication 2, dans laquelle chacun du châssis central (2a) et des châssis satellites (2b) présente trois bords latéraux (4, 5) qui forment un triangle au sein du plan principal.

4. Structure articulée (1) selon quelconque des revendications précédentes, dans laquelle chacun du premier pivot (9) et du deuxième pivot (10) a un seul point de pivotement.

5. Structure articulée (1) selon la revendication 4, dans laquelle chacun du troisième pivot (12) et du quatrième pivot (13) a un seul point de pivotement.

6. Structure articulée (1) selon la revendication 5, dans laquelle la distance entre les points de pivotement des premier et troisième pivots (9, 12) est fixe et la distance entre les points de pivotement des deuxième et quatrième pivots (10, 13) est fixe.

7. Structure articulée (1) selon quelconque des revendications précédentes, dans laquelle au moins l'un des premier et second supports (8, 11) est rigide.

8. Structure articulée (1) selon quelconque des revendications précédentes, dans laquelle la distance entre le point de pivotement de l'un des premier et deuxième pivots (9, 10) et au moins un axe de pivotement de l'autre des premier et deuxième pivots (9, 10, 18) est égale à la distance entre le point de pivotement de l'un des troisième et quatrième pivots (12, 13) et au moins un axe de pivotement de l'autre des troisième et quatrième pivots (12, 13, 21).

9. Structure articulée (1) selon quelconque des revendications précédentes, dans laquelle les premier et second accouplements (6, 7) sont pourvus de limiteurs de mouvement (14, 15) respectifs pour limiter au moins l'un des mouvements relatifs suivants du châssis central (2a) et de chacun des châssis satellites (2b) :
un déplacement dans une direction s'étendant perpendiculairement au plan principal,
une rotation autour d'un axe s'étendant perpendiculairement au plan principal,
un déplacement dans une direction s'étendant parallèlement au plan principal et transversalement par rapport à l'axe de rotation imaginaire (IA1, IA2),
une rotation autour d'un axe s'étendant parallèlement au plan principal et transversalement par rapport à l'axe de rotation imaginaire (IA1, IA2),
un déplacement suivant l'axe de rotation imaginaire (IA1, IA2), et
une rotation autour de l'axe de rotation imaginaire (IA1, IA2).

10. Structure articulée (1) selon la revendication 9, dans laquelle les limiteurs de mouvement comprennent des éléments linéairement extensibles (14, 15), dans laquelle des extrémités opposées de chaque élément (14, 15) sont montées de manière pivotante sur les châssis respectifs (2a, 2b) et mobiles les unes par rapport aux autres entre une distance minimale et une distance maximale.

11. Structure articulée (1) selon la revendication 10, dans laquelle une première extrémité du limiteur de mouvement (14) du premier accouplement (6) est montée sur le premier support (8, 16, 19) au niveau de l'un des premier et deuxième pivots (9, 10) qui présente le point de pivotement unique et une seconde extrémité opposée est montée sur l'un du châssis central (2a) et du châssis satellite (2b) à distance d'au moins un axe de pivotement de l'autre des premier et deuxième pivots (9, 10, 18), et/ou dans laquelle une première extrémité du limiteur de mouvement (15) du second accouplement (7) est montée sur le second support (11, 17, 20) au niveau de l'un des troisième et quatrième pivots (12, 13) qui présente le point de pivotement unique et une seconde extrémité opposée est montée sur l'un du châssis central (2a) et du châssis satellite (2b) à distance d'au moins un axe de pivotement de l'autre des troisième et quatrième pivots (12, 13, 21).

12. Structure articulée (1) selon la revendication 10 ou 11, dans laquelle une ligne le long de laquelle au moins un des éléments linéairement extensibles (14, 15) est extensible est parallèle au plan principal lorsque le châssis central (2a) et le châssis satellite (2b) se trouvent dans le plan principal.

13. Structure articulée (1) selon la revendication 11 ou 12 et selon la revendication 2, dans laquelle la première extrémité du limiteur de mouvement (14) du premier accouplement (6) est montée sur le premier support (8, 16, 19) au niveau du deuxième pivot (10) qui présente le point de pivotement unique et la seconde extrémité est montée sur le châssis central (2a) à distance de l'au moins un axe de pivotement du premier pivot (9, 18) et dans laquelle la première extrémité du limiteur de mouvement (15) du second accouplement (7) est montée sur le second support (11, 17, 20) au niveau du quatrième pivot (13) qui présente le point de pivotement unique et la seconde extrémité est montée sur le châssis satellite (2b) à distance d'au moins un axe de pivotement du troisième pivot (12, 21), et dans laquelle les premier et second accouplements (6, 7) sont montés sur chacun des bords latéraux du châssis central (2a).

14. Structure articulée (1) selon la revendication 11 ou 12 et selon la revendication 2, dans laquelle la première extrémité du limiteur de mouvement (14) du premier accouplement (6) est montée sur le premier support (8, 16, 19) au niveau du deuxième pivot (10) qui présente le point de pivotement unique, et la seconde extrémité est montée sur le châssis central (2a) à distance d'au moins un axe de pivotement du premier pivot (9, 18), et dans laquelle la première extrémité du limiteur de mouvement (15) du second accouplement (7) est montée sur le second support au niveau du troisième pivot qui présente le point de pivotement unique, et la seconde extrémité est montée sur le châssis satellite (2b) à distance d'au moins un axe de pivotement du quatrième pivot.

15. Structure articulée (1) selon quelconque des revendications précédentes, dans laquelle la structure articulée est une structure flottante (1).
